(19) **Europäisches Patentamt**

**European Patent Office**

**Office européen des brevets**

(11) **EP 1 142 098 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(51) Int Cl.7: **H02P 3/18**

(21) Anmeldenummer: **99964423.0**

(86) Internationale Anmeldenummer:
**PCT/DE99/03954**

(22) Anmeldetag: **10.12.1999**

(87) Internationale Veröffentlichungsnummer:
**WO 00/036741 (22.06.2000 Gazette 2000/25)**

(54) **VERFAHREN UND EINRICHTUNG ZUR STEUERUNG DES AUSLAUFES EINER INDUKTIONSMASCHINE**

METHOD AND DEVICE FOR CONTROLLING DECELERATION IN AN INDUCTION MACHINE

PROCEDE ET DISPOSITIF POUR COMMANDER LE RALENTISSEMENT D'UN MOTEUR ASYNCHRONE

(84) Benannte Vertragsstaaten:
**DE FR GB**

(30) Priorität: **14.12.1998 DE 19857695**

(43) Veröffentlichungstag der Anmeldung:
**10.10.2001 Patentblatt 2001/41**

(73) Patentinhaber: **SIEMENS AKTIENGESELLSCHAFT**
**80333 München (DE)**

(72) Erfinder:
• **GRIEPENTROG, Gerd**
**D-91058 Erlangen (DE)**
• **RUNGGALDIER, Diethard**
**D-96135 Stegaurach (DE)**

(56) Entgegenhaltungen:
**EP-A- 0 435 038      EP-B- 0 742 970**

**Beschreibung**

Die Erfindung bezieht sich auf ein Verfahren und eine Einrichtung zur Steuerung des Auslaufes einer Induktionsmaschine, deren Stator über einen durch Phasenanschnitt steuerbaren Wechselstromsteller an ein- oder mehrphasiges Wechselstromnetz angeschlossen ist.

Zur Anpassung der einer Induktionsmaschine zugeführten elektrischen Leistung an die jeweils aktuellen Lastverhältnisse, insbesondere beim Anlaufen und Auslaufen, ist es beispielsweise aus der EP 0 454 697 B1 bekannt, einen mikroprozessorgesteuerten Wechselstromsteller bzw. Softstarter einzusetzen, der nach dem Phasenanschnitt-Prinzip arbeitet. Dieser mikroprozessorgesteuerte Wechselstromsteller dient im wesentlichen zum ruckfreien An- und Auslauf von Drehstrom-Asynchronmaschinen. Hierzu werden meist drei Ventilsätze, im allgemeinen bestehend aus jeweils zwei antiparallel geschalteten Thyristoren, durch einen Mikroprozessor angesteuert.

Mit Hilfe eines solchen mikroprozessorgesteuerten Wechselstromstellers kann nun der Auslauf der Drehstrom-Asynchronmaschine angepaßt an den jeweiligen Anwendungszweck durch geeignete Steuerprogramme realisiert werden. Dadurch kann beispielsweise beim Betrieb einer Pumpe der bei einer Direktabschaltung durch das Schließen der Rückschlagklappe verursachte Wasserschlag reduziert bzw. vermieden werden.

Bei einem Sanftauslauf wird nun ausgehend von einem Phasenanschnittwinkel von 0°, d.h. ausgehend von einer Betriebssituation, in der an den Statorklemmen der Asynchronmaschine die volle Netzspannung anliegt, der Phasenanschnittwinkel erhöht und somit die Klemmenspannung reduziert. Insbesondere die in der Regel verwendeten Kurzschlußläufer reagieren jedoch darauf zunächst mit einer erhöhten Stromaufnahme, nicht aber mit einem abnehmendem Drehmoment. In diesem als Nebenschlußbereich bezeichneten Arbeitsbereich ist eine Beeinflussung bzw. Steuerung der Asynchronmaschine im Betrieb mit einem Drehstromsteller kaum möglich. Erst mit weiterer Absenkung der Klemmenspannung aufgrund eines zunehmenden Phasenanschnittwinkels wird die Drehmomentkennlinie so weit reduziert, daß das Kippdrehmoment nahezu das durch die Last geforderte Drehmoment erreicht. Ab diesem Zeitpunkt reagiert die Asynchronmaschine empfindlich auf Änderungen der Klemmenspannung bzw. des Phasenanschnittwinkels mit Drehmomentschwankungen, so daß eine weitere Verringerung der Klemmenspannung mit der Gefahr verbunden ist, daß es zu einem abrupten Stillstand der Asynchronmaschine kommt.

Aus der EP 0 435 038 A2 ist ein Drehstrommotor mit Drehstromsteller und ein dazugehöriges Steuerverfahren zum Starten und Stoppen des Antriebes beschrieben, bei dem ein sanfter Anlauf und Auslauf insbesondere bei Pumpenantrieben erreicht werden soll. Bei dem dort beschriebenen Verfahren wird ein Phasenanschnittwinkel stufenweise erhöht, bis der Kipppunkt, der durch Vorzeichenvergleich der Spannungen festgestellt wird, erreicht wird. Zur Zündzeitpunktsbestimmung wird die Phasenverschiebung zwischen Strom und Spannung ermittelt und erfolgt anschließend ein gesteuerter Auslauf des Motors nach einem Steuerprogramm.

In der US 5 684 377 wird ein Asynchronmotor mit Drehstromsteller nach einem Ablaufdiagramm gesteuert, bei dem der Zündwinkel stufenweise angehoben oder abgesenkt wird. Durch Abruf von abgespeicherten Werten für die elektronische Leistung an verschiedenen Zeitpunkten und Summenbildung erfolgt eine Glättung, wobei weiterhin durch Vergrößerung oder Verkleinerung des Zündwinkels ein Leistungsfaktormaximum erreicht wird.

Entsprechendes gilt für die Veröffentlichung aus "IEEE Transactions on Power Electronics", 1997, Vol. 6, S. 1041 bis 1051, bei dem ebenfalls der Zündwinkel stufenweise verändert wird und ein Wirkungsgradmaximum erreicht werden soll. Schließlich ist aus der GB 21 49 536 A die stufenweise Veränderung des Zündwinkels eines Asynchronmotors bekannt, um die aufgenommene Energie zu minimieren.

Weiterhin ist aus der EP 0 742 970 B1 ein Verfahren bekannt, bei dem der Phasenwinkel zur Steuerung des Auslaufes einer Induktionsmaschine benutzt wird und der Phasenwinkel selbst nach Detektieren seines Minimums auf einen bestimmten Phasenwinkel-Sollwert geregelt wird.

Ausgehend vom Stand der Technik ist es Aufgabe der Erfindung, zur Steuerung des Auslaufes einer Induktionsmaschine anzugeben, bei dem die Gefahr eines ungewollten unvermittelten Stillstandes der Induktionsmaschine weitgehend vermieden ist. Außerdem liegt der Erfindung die Aufgabe zugrunde, eine Einrichtung zum Steuern des Auslaufes einer Induktionsmaschine anzugeben.

Die Aufgabe wird erfindungsgemäß durch die Abfolge der Verfahrensschritte von Anspruch 1 gelöst. Weiterbildungen sind in den abhängigen Verfahrensansprüchen angegeben.

Die Erfindung beruht dabei auf der Überlegung, daß das zum Auslauf der Induktionsmaschine vorgesehene und dem jeweiligen Anwendungsfall angepaßte Steuerprogramm erst dann ablaufen soll, wenn die Induktionsmaschine einen Betriebszustand erreicht hat, der als Startpunkt für das vorgegebene Steuerprogramm geeignet ist und einen störungsfreien Auslauf der Induktionsmaschine ohne die Gefahr eines abrupten Stillstandes ermöglicht.

Durch die erfindungsgemäß vorgesehene Messung der Phasenverschiebung zwischen der Klemmenspannung und dem Klemmenstrom nach jeder Erhöhung des Phasenanschnittswinkels wird die zum Ermitteln eines günstigen Startpunktes erforderliche Information über den Betriebszustand der Induktionsmaschine erreicht. Durch die erfindungsgemäße Wahl von alternativ des Minimums der Phasenverschiebung oder einem vorgegebenen Zeitabstand nach Erreichen des Minimums der Phasenverschiebung als Arbeitspunkt wird ein geeigneter Betriebszustand als Arbeits- oder Startpunkt für das zum Sanftauslauf vorgesehene Steuerprogramm erreicht. Diese Vorgehensweise beruht auf der Überlegung, daß der günstigste Startpunkt für das Einsetzen des vorgegebenen Steuerprogramms dann vorliegt, wenn die Blindleistung minimal wird. In diesem Zeitpunkt ist ein Betriebszustand erreicht, in dem die Induktionsmaschine sensibel auf eine Steuerung reagiert. Auf diese Weise ist außerdem sichergestellt, daß die Betriebsbedingungen bei Beginn des für den Sanftauslauf verantwortlichen Steuerprogramms stets die gleichen sind.

In einer vorteilhaften Ausgestaltung des Verfahrens wird der Phasenanschnittwinkel bis zum Erreichen des Arbeitspunktes in äquidistanten Winkelschritten erhöht. Dies läßt sich besonders einfach realisieren.

Der Winkelschritt ist vorzugsweise > 1° und beträgt insbesondere zwischen 1,5° und 2°. Dadurch ist sichergestellt, daß der Arbeitspunkt hinreichend genau und in relativ kurzer Zeit erreicht werden kann.

Insbesondere wird der Phasenanschnittwinkel jeweils nach einer Netzperiode erhöht. Dies ermöglicht ein schnelles Erreichen des Arbeitspunktes.

In einer weiteren besonders bevorzugten Ausgestaltung der Erfindung wird die in jeder Netzperiode ermittelte Phasenverschiebung einer digitalen Glättung unterzogen, um eine fehlerhafte Erfassung des gesuchten Arbeitspunktes durch transiente Störungen zu vermeiden.

Die zweitgenannte Aufgabe wird gemäß der Erfindung gelöst mit einer Einrichtung mit den Merkmalen des Patentanspruches 6. Die Einrichtung zur Durchführung der erfindungsgemäßen Verfahren enthält eine Steuereinrichtung zur schrittweisen Erhöhung des Phasenanschnittwinkels bis zum Erreichen eines vorgegebenen Arbeitspunktes und zur anschließenden Steuerung des Phasenanschnittwinkels zum Durchführen des Auslaufes der Induktionsmaschine nach einem vorgegebenen Steuerprogramm.

Zur weiteren Erläuterung der Erfindung wird auf das Ausführungsbeispiel der Zeichnung verwiesen. Es zeigen:

FIG 1    eine Einrichtung gemäß der Erfindung in einem schematischen Blockschaltbild,

FIG 2    ein Diagramm, in dem der Phasenanschnittwinkel, die Phasenverschiebung, die Drehzahl und das Drehmoment in jeweils willkürlichen Einheiten gegen die Zeit aufgetragen sind.

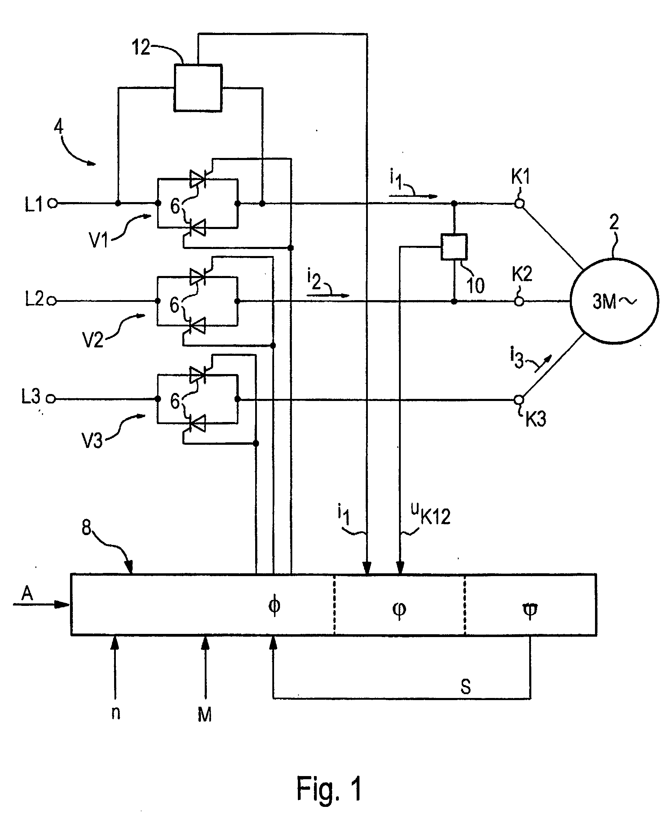

Gemäß FIG 1 ist eine Induktionsmaschine 2, beispielsweise eine Drehstrom-Asynchronmaschine, über einen dreiphasigen Wechselstromsteller 4, der auch als Drehstromsteller gekennzeichnet wird, an die Phasen L1, L2, L3 eines dreiphasigen Netzes angeschlossen. Jeder Phase L1, L2, L3 ist eine Ventilanordnung V1, V2, V3 zugeordnet, wobei die einzelnen Ventilanordnungen V1, V2, V3 im Ausführungsbeispiel jeweils aus zwei antiparallel geschalteten Thyristoren 6 bestehen. Die Zündelektroden der Thyristoren 6 sind an eine Steuereinrichtung 8 angeschlossen, mit der die zum Zünden der Thyristoren 6 erforderlichen Zündsignale in einer vorgegebenen zeitlichen Abfolge bereitgestellt werden.

Zwischen zwei Statorklemmen, im Beispiel zwischen den Statorklemmen K1 und K2 der Induktionsmaschine 2 ist eine Spannungsmeßeinrichtung 10 geschaltet, an deren Ausgang die zwischen diesen beiden Statorklemmen K1, K2 auftretende Klemmenspannung $u_{K12}$ bereitsteht. Mit Hilfe einer Strommeßeinrichtung 12 wird ein vom Klemmenstrom $i_1$ abhängiges Meßsignal S erzeugt, aus dem der zeitliche Nulldurchgang des zur Statorklemme K1 fließenden Klemmenstrom $i_1$ abgeleitet werden kann.

Hierzu reicht es aus, den Klemmenstrom $i_1$ indirekt durch den Spannungsabfall über dem dieser Statorklemme zugeordneten Ventilsatz V1 zu erfassen. Anstelle des Statorklemmenstromes $i_1$ kann auch einer der anderen Statorklemmenströme $i_{2,3}$ und eine diesen zugeordnete Klemmenspannung $u_{K23,13}$ erfaßt werden.

In der Steuereinrichtung 8 wird die aktuelle Phasenverschiebung φ zwischen der Klemmenspannung $u_{K12}$ und dem Klemmenstrom $i_1$ gemessen und einer weiteren Bearbeitung unterzogen:

Mit Hilfe der Steuereinrichtung 8 wird bei Eingang eines Abschaltsignals A zunächst der Phasenanschnittwinkel φ schrittweise, vorzugsweise im Abstand einer Netzperiode um einen konstanten Winkelschritt Δφ, beispielsweise etwa 1° bis 3° erhöht. Nach jeder Erhöhung wird nun die Phasenverschiebung φ bzw. der Phasenwinkel gemessen. Im folgenden bedeuten:

| | |
|---|---|
| φ | Phasenverschiebung |
| $\overline{\varphi}$ | Mittelwert der Phasenverschiebung |
| $\varphi_{min}$ | Minimum der Phasenverschiebung |
| $n_M$ | Zähler |
| $n_{lim}$ | Grenzwert für den Zähler |

Aus der im n-ten Schritt gemessenen Phasenverschiebung $\varphi_n$ wird nun in einem in der Steuereinrichtung 8 enthaltenen Mikrocontroller mit einem aus der vorhergehenden Messung abgeleiteten und gespeicherten Mittelwert $\overline{\varphi}_{n-1}$ gemäß der folgenden Gleichung jeweils ein neuer Mittelwert $\overline{\varphi}_n$ gebildet:

$$\overline{\varphi}_n = \frac{3 * \overline{\varphi}_{n-1} + \varphi_n}{4} \qquad (1)$$

Auf diese Weise wird eine digitale Glättung durchgeführt, um zufällige Schwankungen zu unterdrücken. Am Startpunkt (n=0) werden $\bar{\varphi}_0 = \varphi_0$ und $\varphi_{min} = \varphi_0$ gesetzt.

Wenn nun die Bedingung $\bar{\varphi}_n < \varphi_{min}$ erfüllt ist, werden $\varphi_{min} = \bar{\varphi}_n$ und der Wert für den Zähler $n_M$ auf 0 gesetzt, $n_M = 0$. Andernfalls wird $n_M$ um 1 erhöht, $n_M = n_M + 1$. Überschreitet daraufhin $n_M$ einen vorgegebenen Grenzwert $n_{lim}$, der im Ausführungsbeispiel etwa 3 bis 5 beträgt, so ist das Phasenverschiebungsminimum $\varphi_{min}$ mit Sicherheit gefunden. Der Zähler $n_M$ beginnt somit erst zu laufen, wenn nach einer Erhöhung des Phasenanschnittwinkels $\phi$ erstmals festgestellt wird, daß der mit Hilfe der Gleichung (1) ermittelte aktuelle Mittelwert der Phasenverschiebung $\bar{\varphi}$ größer als der vorhergehende Mittelwert ist. Da trotz der mit Gleichung (1) durchgeführten digitalen Glättung nicht ausgeschlossen werden kann, daß es sich hierbei um einen durch eine zufällige Störung, beispielsweise eine Belastungsschwankung, hervorgerufenen Meßfehler handelt, wird die schrittweise Verringerung des Phasenanschnittwinkels $\phi$ noch weitergeführt, bis mit Hilfe des Kriteriums $n_M > n_{lim}$ sichergestellt ist, daß es sich bei den vor $n_{lim}$ Schritten ermittelten Mittelwert der Phasenverschiebung $\bar{\varphi}$ tatsächlich um das Minimum gehandelt hat.

Die Induktionsmaschine 2 befindet sich nunmehr in einem Zustand bzw. Arbeitspunkt, von dem aus die der Auslauf mit einem vorgegebenen und in der Steuereinrichtung 8 gespeicherten Steuerprogramm erfolgen kann. Ein intern bereitgestelltes Startsignal S initiiert dann in der Steuereinrichtung 8 einen vorgegebenen Ablauf des Auslaufvorganges. Hierzu kann es auch erforderlich oder vorteilhaft sein, weitere Meßdaten über den Betriebszustand der Induktionsmaschine 2, beispielsweise deren Drehzahl n oder deren Drehmoment M, zu erfassen und im Rahmen des Steuerprogramms zu einem geregelten Auslauf zu verwenden.

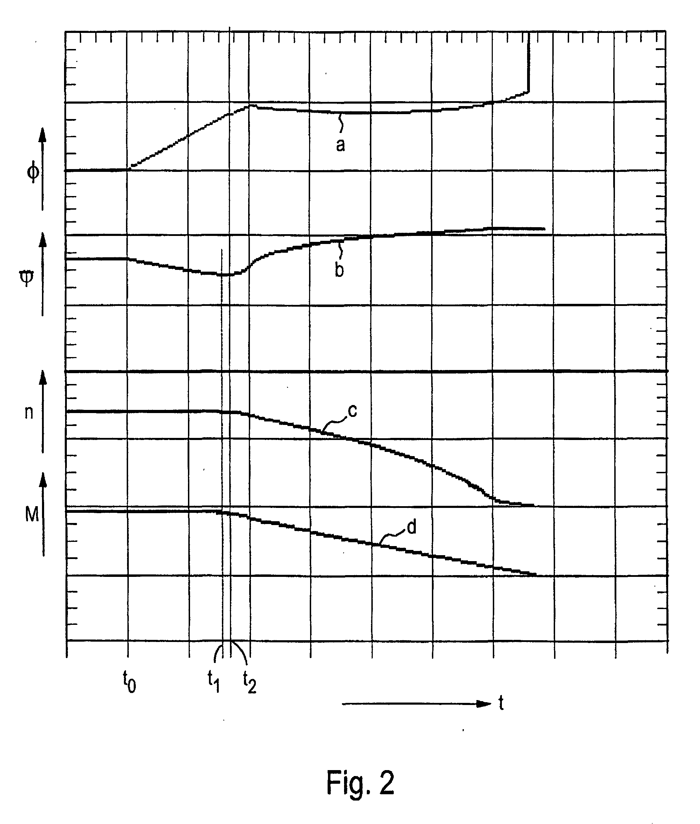

Gemäß FIG 2 wird bei Vorliegen eines Abschaltsignals A zu einem Zeitpunkt $t_0$ der Auslauf der Induktionsmaschine eingeleitet. Der Kurve a ist zu entnehmen, daß der Phasenanschnittwinkel $\phi$ ausgehend von 0° linear, d.h. mit äquidistanten Winkelschritten $\Delta\phi$ in äquidistanten Zeitabständen $\Delta t$ erhöht wird. Kurve b gibt wieder, daß die Phasenverschiebung $\bar{\varphi}$ vor dem Zeitpunkt $t_0$ annähernd konstant war und ab $t_0$ sukzessive abnimmt und im Zeitpunkt $t_1$ ein flaches Minimum erreicht. Bis zu diesem Zeitpunkt $t_1$ bleibt die durch Kurve c wiedergegebene Drehzahl sowie das durch Kurve d wiedergegebene Drehmoment der Induktionsmaschine annähernd konstant. Ab dem Zeitpunkt $t_2 = t_1 + (n_{lim}+1)^*\Delta t$ wird nun der Phasenanschnittwinkel $\phi$ so gesteuert, daß die Drehzahl n und das Drehmoment M sukzessive abnehmen.

**Patentansprüche**

1. Verfahren zur Steuerung des Auslaufes einer Induktionsmaschine (2), deren Stator über einen durch Phasenanschnitt steuerbaren Wechselstromsteller (4) an ein ein- oder mehrphasiges Wechselstromnetz (L1,L2,L3) angeschlossen ist, mit folgenden Verfahrensschritten:

- zunächst wird der Phasenanschnittwinkel ($\phi$) schrittweise bis zum Erreichen eines Arbeitspunktes, der entweder durch das Minimum der Phasenverschiebung ($\varphi,\bar{\varphi}$) oder durch einen vorgegebenen Zeitabstand nach Erreichen des Minimums der Phasenverschiebung ($\varphi,\bar{\varphi}$) festgelegt wird, erhöht,
- zur Bestimmung des Erreichens des Arbeitspunktes wird nach jeder Erhöhung des Phasenanschnittwinkels ($\phi$) die Phasenverschiebung ($\varphi, \bar{\varphi}$) zwischen der Klemmenspannung ($u_{K12}$) und dem Klemmenstrom ($i_1$) gemessen,
- mit Erreichen des festgelegten Arbeitspunktes erfolgt anschließend zum Auslauf der Induktionsmaschine (2) eine Steuerung des Phasenanschnittwinkels ($\phi$) nach einem vorgegebenen Steuerprogramm.

2. Verfahren nach Anspruch 1, **dadurch gekennzeichnet, daß** der Phasenanschnittwinkel ($\phi$) bis zum Erreichen des Arbeitspunktes in äquidistanten Winkelschritten ($\Delta\phi$) erhöht wird.

3. Verfahren nach Anspruch 2, **dadurch gekennzeichnet, daß** der Winkelschritt ($\Delta\phi$) zwischen 1,5° und 2° beträgt.

4. Verfahren nach Anspruch 2 oder Anspruch 3, **dadurch gekennzeichnet, daß** die gemessene Phasenverschiebung ($\varphi$) einer digitalen Glättung unterzogen wird.

5. Verfahren nach einem der vorhergehenden Ansprüche, **dadurch gekennzeichnet, daß** der Phasenanschnittwinkel ($\phi$) jeweils nach einer Netzperiode erhöht wird.

6. Einrichtung zur Steuerung des Auslaufes einer Induktionsmaschine (2), deren Stator über einen durch Phasenanschnitt steuerbaren Wechselstromsteller (4) an ein ein- oder mehrphasiges Wechselstromnetz (L1,L2,L3) angeschlossen ist, entsprechend dem Verfahren nach Anspruch 1 oder einem der Ansprüche 2 bis 6, mit einer Steuereinrichtung (8) zur schrittweisen Erhöhung des Phasenanschnittwinkels ($\phi$) bis zum Erreichen eines anhand vorgegebener Kriterien festgelegten Arbeitspunktes und zur anschließenden Steuerung des Phasenanschnittwinkels ($\phi$) zum Durchführen des Auslaufes der Induktionsmaschine (2) nach einem vorgegebenen Steuerprogramm.

## Claims

1. Method for controlling the rundown of an induction machine (2), the stator of which is connected via a phase control a.c. power controller (4) to a single- or multi-phase a.c. system (L1, L2, L3), with the following process steps:

   - First, the phase control angle ($\phi$) is increased in stages until an operating point is reached which is determined either by the minimum phase shift ($\varphi, \bar{\varphi}$) or a specified time interval after reaching the minimum phase shift ($\varphi, \bar{\varphi}$).

   - To determine that the operating point is reached, the phase shift ($\phi, \bar{\varphi}$) between the terminal voltage ($U_{K12}$) and the terminal current ($i_1$) is measured after each increase in the phase control angle ($\varphi$).

   - When this specified operating point is reached, control of the phase control angle ($\phi$) according to a specified control program takes place to run down the induction machine (2).

2. Method according to Claim 1, **characterised in that** the phase control angle ($\phi$) is increased in equidistant angle steps ($\Delta\phi$) until the operating point is reached.

3. Method according to Claim 2, **characterised in that** the angle step ($\Delta\phi$) is between 1.5° and 2°.

4. Method according to Claim 2 or Claim 3, **characterised in that** the measured phase shift ($\varphi$) is subjected to digital smoothing.

5. Method according to one of the previous preceding claims, **characterised in that** the phase control angle ($\phi$) is increased in each case after a line period.

6. Device to control the rundown of an induction machine (2), the stator of which is connected via a phase control a.c. power controller (4) to a single- or multi-phase a.c. system (L1, L2, L3), corresponding to the method according to Claim 1 or one of Claims 2 to 6, with a control device (8) for increasing the phase control angle ($\phi$) in steps until a working point specified according to given criteria is reached, and for subsequent control of the phase control angle ($\phi$) to implement the rundown of the induction machine (2) according to a specified control program.

## Revendications

1. Procédé pour la commande du ralentissement d'une machine à induction (2) dont le stator est raccordé à un réseau de courant alternatif monophasé ou polyphasé (L1, L2, L3) par l'intermédiaire d'un gradateur de courant alternatif (4) pouvant être commandé par coupe, avec les étapes de procédé suivantes :

   - on augmente d'abord l'angle de flux ($\phi$) pas à pas jusqu'à atteindre un point de fonctionnement qui est fixé soit par le minimum du déphasage ($\varphi, \bar{\varphi}$) soit par un intervalle de temps prédéterminé après que le minimum du déphasage ($\varphi, \bar{\varphi}$) a été atteint,
   - pour déterminer que le point de fonctionnement est atteint, on mesure après chaque augmentation de l'angle de flux ($\phi$) le déphasage ($\varphi, \bar{\varphi}$) entre la tension aux bornes ($u_{K12}$) et le courant de borne ($i_1$),
   - lorsque le point de fonctionnement fixé est atteint, on effectue alors pour le ralentissement de la machine à induction (2) une commande de l'angle de flux ($\phi$) selon un programme de commande prédéterminé.

2. Procédé selon la revendication 1, **caractérisé par le fait qu'**on augmente l'angle de flux ($\phi$) selon des pas angulaires équidistants ($\Delta\phi$) jusqu'à ce que le point de fonctionnement soit atteint.

3. Procédé selon la revendication 2, **caractérisé par le fait que** le pas angulaire ($\Delta\phi$) vaut entre 1,5° et 2°.

4. Procédé selon la revendication 2 ou 3, **caractérisé par le fait qu'**on soumet le déphasage mesuré ($\varphi$) à un lissage numérique.

5. Procédé selon l'une des revendications précédentes, **caractérisé par le fait qu'**on augmente l'angle de flux ($\phi$) à chaque fois après une période de réseau.

6. Dispositif pour la commande du ralentissement d'une machine à induction (2) dont le stator est raccordé à un réseau de courant alternatif monophasé ou polyphasé (L1, L2, L3) par l'intermédiaire d'un gradateur de courant alternatif (4) pouvant être commandé par coupe, conformément au procédé selon la revendication 1 ou selon l'une des revendications 2 à 6, avec un dispositif de commande (8) pour l'augmentation pas à pas de l'angle de flux ($\phi$) jusqu'à atteindre un point de fonctionnement fixé à l'aide de critères prédéterminés et pour la commande consécutive de l'angle de flux ($\phi$) en vue de la mise en oeuvre du ralentissement de la machine à induction (2) selon un programme de commande prédéterminé.

Fig. 1

Fig. 2